# EUROPEAN PATENT APPLICATION

(11) **EP 3 410 179 A1**
(43) Date of publication of application: **05.12.2018**
(21) Application number: 17744180.5
(22) Date of filing: 24.01.2017
(51) Int. Cl.: G02F 1/1334

(54) **LIQUID CRYSTAL DISPLAY DEVICE AND MANUFACTURING METHOD FOR SAME**

(30) Priority: 29.01.2016 JP 2016015609
(71) Applicant: Ortus Technology Co., Ltd., Tokyo 191-0065 (JP)
(72) Inventor: KOBAYASHI, Kunpei, Hino-shi Tokyo 191-0065 (JP); CHIKAMORI, Hiroyuki, Hino-shi Tokyo 191-0065 (JP); ARAI, Norihiro, Hino-shi Tokyo 191-0065 (JP); KOMAKI, Masamichi, Hino-shi Tokyo 191-0065 (JP)
(74) Representative: Nederlandsch Octrooibureau
(86) International application number: PCT/JP2017/002310
(87) International publication number: WO 2017/130950

(57) **Abstract**

A liquid crystal display device (10) includes: a TFT film substrate (33) having flexibility; a COM film substrate (30) having flexibility and arranged so as to be opposed to the TFT film substrate (33); a liquid crystal layer (32) including a polymer dispersed liquid crystal (PDLC) or a polymer network type liquid crystal (PNLC) and sandwiched between the TFT film substrate (33) and the COM film substrate (30); a switching element (17) provided on the TFT film substrate (33); a reflective film (35) provided on the switching element (17); a pixel electrode (39) provided on the reflective film (35) and electrically connected to a drain electrode of the switching element (17); and a common electrode (31) provided on the COM film substrate (30).

## Description

### FIELD

The present invention generally relates to a liquid crystal display device, and more particularly to a liquid crystal display device using a polymer dispersed liquid crystal and a manufacturing method thereof.

### BACKGROUND

A polymer dispersed liquid crystal has a structure in which liquid crystals are phase separated in a three-dimensional net-like polymer (polymer network), and a light scattering state and a light transmission state are respectively created in a state in which liquid crystal molecules are randomly arranged along a side wall of the polymer network and in a state in which liquid crystal molecules are aligned in the direction of an electric field by applying the electric field.

A display device using the polymer dispersed liquid crystal has a structure in which a TFT (Thin Film Transistor) glass substrate, on which a TFT is formed, and a COM glass substrate, on which a common electrode is formed, sandwich a polymer liquid crystal, and a reflective film and a color filter are formed on the TFT glass substrate side (for example, Jpn. Pat. Appln. KOKAI Publication No. 2015-82018). Since such a liquid crystal display device does not require a polarizing plate unlike a display using normal liquid crystal, bright reflective display is possible. For this reason, it is used as a reflection type color liquid crystal display device for electronic books, electronic dictionaries, or wearable devices, etc. which require high visibility outdoors.

However, when used as an electronic book, an electronic dictionary, or a wearable device, the glass substrate constituting the liquid crystal display device is liable to be damaged.

### SUMMARY

### TECHNICAL PROBLEM

An object of the present invention is to provide a liquid crystal display device which is flexible and resistant to damage and a method of manufacturing the same.

### SOLUTION TO PROBLEM

A liquid crystal display device according to an aspect of the present invention is characterized by comprising: a first film substrate having flexibility; a second film substrate having flexibility and arranged so as to be opposed to the first film substrate; a liquid crystal layer including a polymer dispersed liquid crystal (PDLC) or a polymer network type liquid crystal (PNLC) and sandwiched between the first film substrate and the second film substrate; a switching element provided on the first film substrate; a reflective film provided on the switching element; a pixel electrode provided on the reflective film and electrically connected to a drain electrode of the switching element; and a common electrode provided on the second film substrate.

A manufacturing method of a liquid crystal display device according to an aspect of the present invention is characterized by comprising: attaching a first film substrate to a first glass substrate; forming a switching element, a reflective film, and a color filter on the first film substrate adhered to the first glass substrate; attaching a second film substrate to a second glass substrate; and combining the first glass substrate with the first film substrate and the second glass substrate with the second film substrate and filling a polymer dispersed liquid crystal or a polymer network liquid crystal in between the first film substrate and the second film substrate.

### ADVANTAGEOUS EFFECTS OF INVENTION

According to the present invention, it is possible to provide a liquid crystal display device which is flexible and resistant to damage, and a manufacturing method thereof.

### BRIEF DESCRIPTION OF THE DRAWINGS

FIG. 1 is a block diagram of a liquid crystal display device according to an embodiment.
FIG. 2 is a circuit diagram of a pixel in the liquid crystal display device.
FIG. 3 is a layout diagram of a liquid crystal display panel in the embodiment.
FIG. 4 is a cross-sectional view of the liquid crystal display panel taken along line A-A' in FIG. 3.
FIG. 5 is a cross-sectional view of the liquid crystal display panel taken along line B-B' in FIG. 3.
FIG. 6 is a diagram showing characteristics of a TFT film substrate and a COM film substrate in the embodiment.
FIG. 7 is a cross-sectional view of the TFT film substrate in the embodiment.
FIG. 8 is a cross-sectional view of the COM film substrate in the embodiment.
FIG. 9 is a view showing a manufacturing process of the TFT film substrate in the embodiment.
FIG. 10 is a view showing the manufacturing process of the TFT film substrate in the embodiment.
FIG. 11 is a view showing the manufacturing process of the TFT film substrate in the embodiment.
FIG. 12 is a view showing the manufacturing process of the TFT film substrate in the embodiment.
FIG. 13 is a view showing the manufacturing process of the TFT film substrate in the embodiment.
FIG. 14 is a view showing a manufacturing process of a COM film substrate in the embodiment.
FIG. 15 is a view showing the manufacturing process of the COM film substrate in the embodiment.
FIG. 16 is a view showing the manufacturing process of the COM film substrate in the embodiment.
FIG. 17 is a view showing the manufacturing process of the COM film substrate in the embodiment.
FIG. 18 is a view showing the manufacturing process of the COM film substrate in the embodiment.
FIG. 19 is a view showing a process of manufacturing the liquid crystal display device by combining the TFT film substrate and the COM film substrate in the embodiment.
FIG. 20 is a view showing the process of manufacturing the liquid crystal display device by combining the TFT film substrate and the COM film substrate in the embodiment.
FIG. 21 is a view showing the process of manufacturing the liquid crystal display device by combining the TFT film substrate and the COM film substrate in the embodiment.
FIG. 22 is a view showing the process of manufacturing the liquid crystal display device by combining the TFT film substrate and the COM film substrate in the embodiment.
FIG. 23 is a view showing the process of manufacturing the liquid crystal display device by combining the TFT film substrate and the COM film substrate in the embodiment.

### DETAILED DESCRIPTION

Hereinafter, embodiments will be described with reference to the drawings. It should be noted that the drawings are schematic or conceptual, and the dimensions and ratios of the drawings are not necessarily the same as the actual ones. In addition, even when the same parts are shown in the drawings, their dimensional relationships and ratios may be illustrated differently from one another. In particular, some embodiments described below exemplify apparatuses and methods for embodying the technical idea of the present invention, and the technical idea of the present invention is not specified depending on the shape, structure, arrangement, etc. of constituent components. In the following descriptions, elements having the same functions and configurations are denoted by the same reference numerals, and redundant explanations are given only when necessary.

Hereinafter, a liquid crystal display device of an embodiment will be described.

### [1] Configuration of Liquid Crystal Display Device

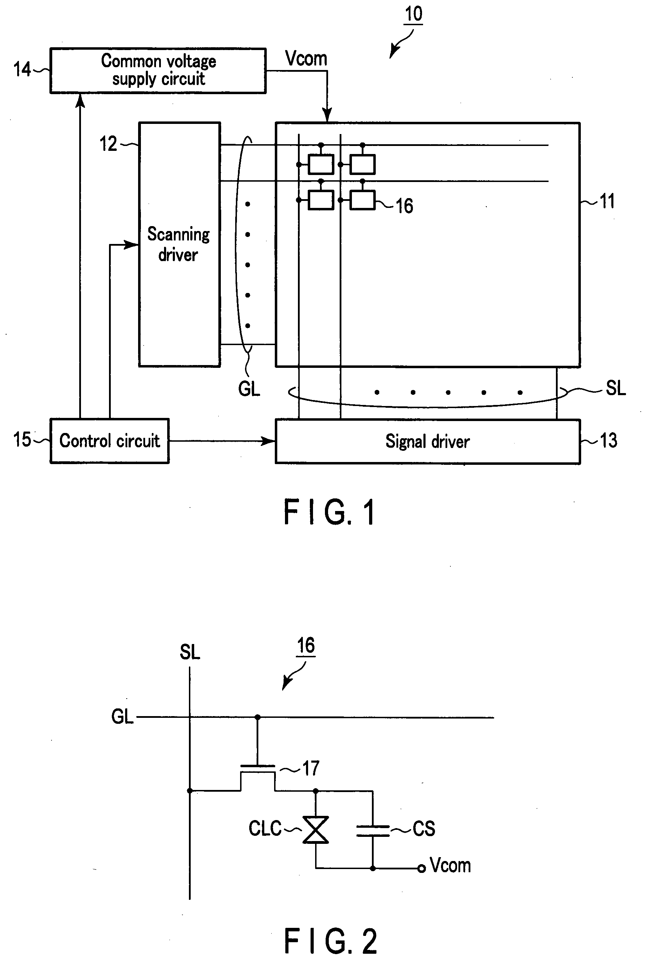

FIG. 1 is a block diagram of a liquid crystal display device according to an embodiment. A liquid crystal display device 10 includes a liquid crystal display panel 11, a scanning driver (a scanning line driving circuit) 12, a signal driver (a signal line driving circuit) 13, a common voltage supply circuit 14, and a control circuit 15.

In the liquid crystal display panel 11, a plurality of scanning lines GL each extending in the row direction (X direction) and a plurality of signal lines SL each extending in the column direction (Y direction) are arranged. In each intersection region between the plurality of scanning lines GL and the plurality of signal lines SL, a pixel 16 is arranged. The plurality of pixels 16 are arranged in a matrix.

FIG. 2 is a circuit diagram of one pixel 16. The pixel 16 includes a switching element 17, a liquid crystal capacitance CLC, and a storage capacitance CS. The switching element 17 is composed of, for example, a thin film transistor (TFT).

A source of a TFT 17 is electrically connected to the signal line SL. A gate of the TFT 17 is electrically connected to the scanning line GL. A drain of the TFT 17 is electrically connected to a pixel electrode. The pixel electrode constitutes a liquid crystal capacitance CLC together with a common electrode arranged opposite to the pixel electrode and liquid crystal sandwiched between the pixel electrode and the common electrode.

The storage capacitance CS is connected in parallel with the liquid crystal capacitance CLC. The storage capacitance CS suppresses a potential fluctuation occurring in the pixel electrode, and maintains a pixel voltage applied to the pixel electrode until the next pixel voltage is applied again. The storage capacitance CS is composed of a storage electrode arranged opposite to the pixel electrode and an insulating film formed between the pixel electrode and the storage electrode. A common voltage Vcom is applied to the common electrode and the storage electrode by the common voltage supply circuit 14.

In the pixel 16 configured as described above, when the TFT 17 connected to the pixel electrode is turned on, the pixel voltage is applied to the pixel electrode via the signal line SL, and an alignment state of the liquid crystal is changed according to a voltage difference between the pixel voltage and the common voltage Vcom. As a result, a transmission state of the liquid crystal with respect to an incident light and a reflected light is changed, and image display is performed.

The scanning driver 12 is connected to the plurality of scanning lines GL, and sequentially drives the plurality of scanning lines GL based on a vertical control signal from the control circuit 15. The vertical control signal from the control circuit 15 is applied every one frame period. "Frame" is a period during which one image is displayed by supplying display signals to all the pixels of the liquid crystal display panel.

The signal driver 13 is connected to the plurality of signal lines SL, and fetches image data for one horizontal period based on a horizontal control signal from the control circuit 15. The horizontal control signal from the control circuit 15 is generated every horizontal period which is a period for transferring a display signal for one row (one scanning line) of the liquid crystal display panel 11 to the pixels. Then, the signal driver 13 supplies a display signal corresponding to the image data to the pixel electrode via the signal line SL.

The control circuit 15 generates various control signals for displaying a desired image on the liquid crystal display panel 11 based on the image data supplied from the outside, and supplies the control signals to the scanning driver 12, the signal driver 13, and the common voltage supply circuit 14.

Generally, in a liquid crystal display device, inversion driving (AC driving) is performed in which the polarity of an electric field between a pixel electrode and a common electrode sandwiching the liquid crystal is inverted at a predetermined period. In the liquid crystal display panel 11, as described above, the arrangement of the liquid crystal is determined according to the electric field between the pixel electrode and the common electrode. However, if an electric field of the same polarity is continuously applied between the pixel electrode and the common electrode, it may cause image burn-in or deterioration and destruction of the liquid crystal. Therefore, by periodically inverting the polarity of the electric field between the pixel electrode and the common electrode, deterioration of the liquid crystal, etc. is prevented. As an inversion driving method, line inversion driving and frame inversion driving are common. The line inversion driving is a method of inverting the polarity of an electric field for each scanning line and also inverting it for each frame period. The frame inversion driving is a method of inverting the polarity of an electric field for each pixel for each frame period.

### [1-1] Configuration of Liquid Crystal Display Panel 11

The liquid crystal display panel 11 is constituted of a reflective type color PDLCD (Polymer Dispersed Liquid Crystal Display). The liquid crystal display panel 11 uses an active matrix method in which active elements are arranged for each pixel 16. In the present embodiment, end portions of adjacent color filters CF are overlapped, and a reflective film is provided independently for each pixel 16.

### [1-1-1] Laminated Structure

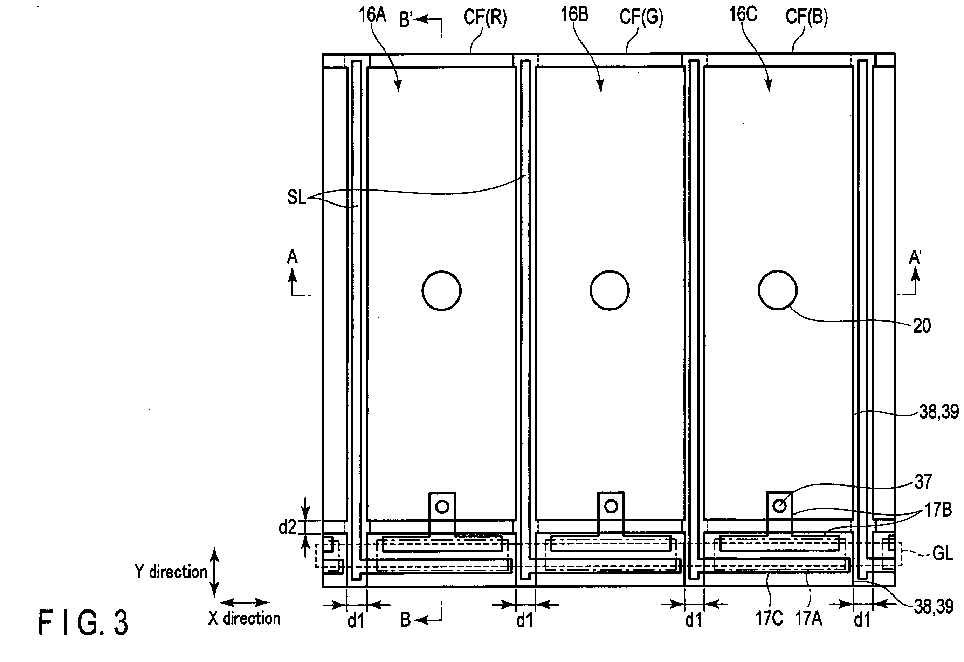

FIG. 3 is a layout diagram of the liquid crystal display panel 11 according to the embodiment. In FIG. 3, three pixels 16A, 16B, and 16C included in the liquid crystal display panel 11 are extracted and shown. The liquid crystal display panel 11 further includes a plurality of pixels in such a manner that the pixels shown in FIG. 3 are repeated in the X direction and in the Y direction orthogonal to the X direction. The width of a space between the pixel electrodes 39 adjacent in the X direction is denoted as d1, and the width of a space between the pixel electrodes 39 adjacent in the Y direction is denoted as d2. In FIG. 3, a reflective film 35 and a storage capacitance electrode 34 are not shown in order to avoid complication of the drawing.

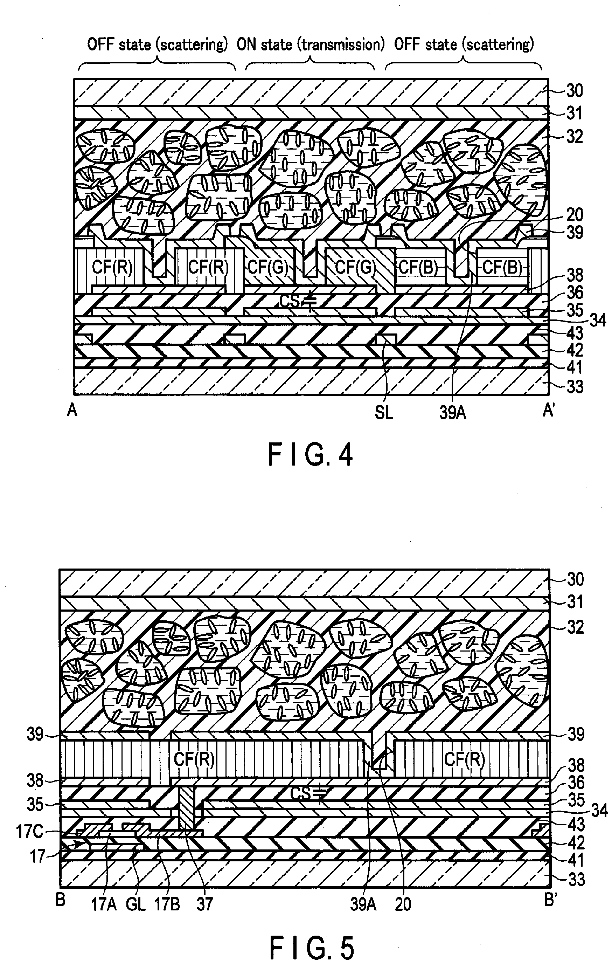

FIG. 4 is a cross-sectional view of the liquid crystal display panel 11 taken along line A-A' in FIG. 3. FIG. 5 is a cross-sectional view of the liquid crystal display panel 11 taken along line B-B' in FIG. 3. As shown in FIGS. 4 and 5, the liquid crystal display panel 11 includes a COM film substrate (an opposing substrate) 30, a liquid crystal layer 32, and a TFT film substrate 33. The COM film substrate 30 is a substrate on which the common electrode 31 is formed. The TFT film substrate 33 is a substrate on which the TFT 17 is formed.

The COM film substrate 30 is arranged opposite to the TFT film substrate 33. The liquid crystal layer 32 is provided between the COM film substrate 30 and the TFT film substrate 33. The liquid crystal layer 32 is sealed with a sealing member (not shown) for laminating the COM film substrate 30 and the TFT film substrate 33. The COM film substrate 30 is arranged on a display surface front side. The TFT film substrate 33 is arranged on a display surface back side. That is, an incident light enters the liquid crystal display panel 11 from the COM film substrate 30 side. As the TFT film substrate 33, a film containing PI (polyimide) is used. As the COM film substrate 30, a transparent film containing PET (polyethylene terephthalate) is used. Details of the TFT film substrate 33 and the COM film substrate 30 will be described later.

The liquid crystal layer 32 is constituted by a polymer dispersed liquid crystal (PDLC). PDLC has a structure in which a liquid crystal is dispersed by a polymer, that is, a liquid crystal is phase separated in a polymer. As a polymer layer (polymer layer), for example, a photocurable resin is used. The liquid crystal layer 32 is configured so that a refractive index of the polymer layer and a refractive index of the liquid crystal are approximately the same when an electric field is applied. As a liquid crystal, for example, a nematic liquid crystal having positive dielectric anisotropy is used. The liquid crystal layer 32 may be constituted by a polymer network liquid crystal (PNLC). PNLC has a structure in which a liquid crystal is dispersed in a polymer network. Liquid crystals in the polymer network have a continuous phase in at least some networks. The thickness (cell gap) of the liquid crystal layer 32 is, for example, about 7 µm. A specific configuration of the liquid crystal layer 32 will be described later.

On the liquid crystal layer 32 side of the COM film substrate 30, the common electrode 31 is provided. The common voltage Vcom is applied to the common electrode 31 by the common voltage supply circuit 14. The common electrode 31 is constituted of a transparent electrode, and for example, ITO (indium tin oxide) is used. The film thickness of the common electrode 31 is, for example, 10 nm or more and 200 nm or less.

On the liquid crystal layer 32 side of the TFT film substrate 33, an insulating film 41 is provided. As the insulating film 41, for example, a silicon nitride film (SiN) or a silicon oxide film is used. The thickness of the insulating film 41 is, for example, 100 nm or more and 1000 nm or less. If the insulating film 41 is provided on the TFT film substrate 33, the same manufacturing processes as those in the case of using a normal glass substrate can be used for subsequent manufacturing processes. Furthermore, the insulating film 41 serves as a barrier film for the TFT film substrate 33. That is, the insulating film 41 has functions of preventing the subsequent processes from affecting the TFT film substrate 33 and blocking gas exiting from the TFT film substrate 33.

On the insulating film 41, the scanning line (wiring layer) GL extending in the X direction is provided. On the scanning line GL, a gate insulating film 42 is provided. On the gate insulating film 42, the signal line (wiring layer) SL and the TFT 17 are provided. The signal line SL extends in the Y direction.

The TFT 17 includes the scanning line GL, the gate insulating film 42, a semiconductor layer 17A, a drain electrode 17B, and a source electrode 17C. The semiconductor layer 17A is provided on the gate insulating film 42 so as to be opposed to the scanning line GL. The drain electrode 17B is provided at one end of the semiconductor layer 17A in the Y direction, and the source electrode 17C is provided at the other end, so that each is in contact with the semiconductor layer 17A. The drain electrode 17B has a convex portion extending in the Y direction, and a contact plug 37 is provided on the convex portion. The source electrode 17C extends in the X direction, and is electrically connected to the signal line SL. As the semiconductor layer 17A, for example, amorphous silicon is used. As the gate insulating film 42, for example, silicon nitride (SiN) is used. As shown in FIG. 3, each of the TFTs 17 for driving the pixels 16A, 16B, and 16C is arranged so as to overlap the pixel electrode 39 included in the pixel 16 adjacent in the Y direction, for example.

An insulating film 43 is provided on the signal line SL and the TFT 17. The storage capacitance electrode 34 is provided on the insulating film 43. The storage capacitance electrode 34 is provided in the entire pixel array, except for a region through which the contact plug 37 passes. The storage capacitance electrode 34 functions as one electrode of the storage capacitance CS shown in FIG. 2. The common voltage Vcom is supplied to the storage capacitance electrode 34 by the common voltage supply circuit 14. The storage capacitance electrode 34 is constituted of a transparent electrode, and for example, ITO is used.

The reflective film 35 is provided on the storage capacitance electrode 34. The reflective film 35 is provided for each pixel 16. A specific configuration of the reflective film 35 will be described later. In the present embodiment, as shown in FIGS. 4 and 5, the reflective film 35 is configured to be electrically connected to the storage capacitance electrode 34. As the reflective film 35, for example, aluminum (Al), silver (Ag), molybdenum (Mo), or an alloy containing any of these is used.

An insulating film 36 is provided on the storage capacitance electrode 34 and the reflective film 35. On the insulating film 36, an electrode 38 is provided for each pixel 16. The electrode 38 extends in the Y direction, and is electrically connected to the drain electrode 17B via the contact plug 37 at a Y direction end portion. The contact plug 37 may be formed integrally with the electrode 38, or the contact plug 37 and the electrode 38 may be separately formed. The electrode 38 has a function of electrically connecting the drain electrode 17B and the pixel electrode 39, and a function of setting the capacitance of the storage capacitance CS to a predetermined value according to the size of its planar shape. The electrode 38 has a planar shape substantially the same size as the pixel electrode 39 in order to increase the capacitance of the storage capacitance CS.

A plurality of color filters CF (a red filter CF (R), a green filter CF (G), and a blue filter CF (B)) are provided on the electrode 38. The color filters CF adjacent in the X direction overlap each other at the end portions. A contact hole 20 is provided at the central portion of the color filter CF corresponding to each pixel 16.

The pixel electrode 39 is provided for each pixel 16 on the color filter CF. The pixel electrode 39 is electrically connected to the electrode 38 via the contact plug 39A. The contact plug 39A may be formed integrally with the pixel electrode 39, or the contact plug 39A and the pixel electrode 39 may be separately formed. A pixel voltage is applied to the pixel electrode 39 by the signal driver 13.

As the insulating films 36 and 43, for example, silicon nitride (SiN) is used. The electrode 38, the pixel electrode 39, the contact plug 37, and the contact plug 39A are constituted of transparent electrodes, and for example, ITO is used.

### [1-1-2] COM Film Substrate 30 and TFT Film Substrate 33

As described above, a film made from PI (polyimide) is used as the TFT film substrate 33. For example, "XENOMAX" (registered trademark) is used for the TFT film substrate 33. As the COM film substrate 30, a transparent film made from PET (polyethylene terephthalate) is used. The film is formed by molding a polymer component such as a synthetic resin into a thin film shape. The TFT film substrate 33 is formed by molding a resin containing PI into a thin film shape, and the COM film substrate 30 is formed by molding a resin containing PET into a thin film shape.

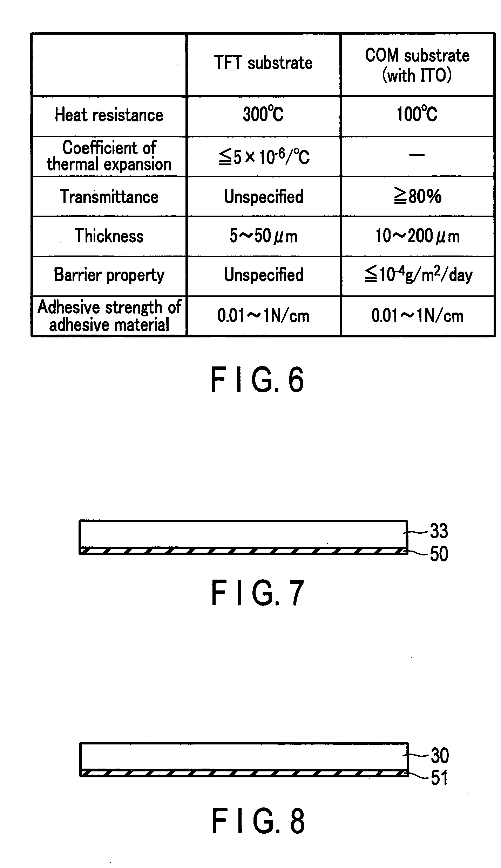

FIG. 6 is a diagram showing characteristics of the TFT film substrate 33 and the COM film substrate 30.

The TFT film substrate 33 has the following characteristics: the heat resistance is 300 °C, the coefficient of thermal expansion is 5 × 10⁻⁶/°C or less, the transmittance is unspecified, the thickness is 5 to 50 µm, and the barrier property is unspecified. The adhesive strength of an adhesive material (e.g., a silane coupling material) applied to the TFT film substrate 33 is 0.01 to 1 N/cm.

The COM film substrate (with ITO) 30 has the following characteristics: the heat resistance is 100 °C, the transmittance is 80% or more with respect to a visible light region, the thickness is 10 to 200 µm, the barrier property is 10⁻⁴ g/m²/day, and the adhesive strength of an adhesive material (e.g., a silane coupling material) is 0.01 to 1 N/cm.

The reason for setting the heat resistance to the above temperature is as follows. In the manufacturing process of the TFT film substrate 33, the highest heat is applied in the film forming process. Since the temperature of this film forming process is close to 300 °C, the heat resistance of the film is set to 300 °C or higher. On the other hand, in the manufacturing process of the COM film substrate 30, since the highest temperature to be applied is 240 °C in the case of using an alignment film (a PI film) and is 100 °C in the other cases, the heat resistance is normally set to 100°C or higher and to 240°C or higher in the case of using the alignment film.

The reason for setting the coefficient of thermal expansion to the above is as follows. For example, in the case where a pattern of 100 µm is formed on the TFT film substrate 33 or the COM film substrate 30, if the maximum is 0.2 µm (500°C) in the TFT film substrate 33 and the maximum is 2.5 µm (250°C) in the COM film substrate 30, there is no problem in the manufacturing process. Therefore, the coefficient of thermal expansion of the TFT film substrate 33 is set to 5×10⁻⁶/°C or less.

In accordance with product requirements, the thickness of the TFT film substrate 33 is set to 5 to 50 µm, and the thickness of the COM film substrate 30 is set to 10 to 200 µm.

The reason for setting the barrier property to the above is as follows. In order to prevent water penetration into the liquid crystal layer 32, the COM film substrate 30 needs the barrier property of 10⁻⁴ g/m²/day. In the TFT film substrate 33, since the insulating film (silicon oxide film) 41 is first formed on the film surface, the insulating film 41 serves as a barrier.

The reason for setting the adhesive strength of the adhesive material to the above is as follows. The adhesive material is, for example, a silane coupling material or an acrylic resin. The adhesive material is used for adhering the TFT film substrate 33 and the COM film substrate 30 to the glass substrate in the manufacturing process of the liquid crystal display device to be described later. Since the glass substrate is peeled off from the TFT film substrate 33 and the COM film substrate 30 after undergoing the manufacturing process of the liquid crystal display device, it is preferable that the adhesive material is basically weakly adhesive, but the edge portion is preferably strongly adhesive. Therefore, the adhesive strength of the adhesive material is 0.01 to 1 N/cm.

### [2] Operation of Liquid Crystal Display Device

A specific configuration of the liquid crystal layer 22 will be described first with reference to FIG. 4, and then an operation of the liquid crystal display device 10 will be described.

The liquid crystal layer 32 includes a polymer layer 32A and a liquid crystal layer 32B. The liquid crystal layer 32B includes liquid crystal molecules 32C. In detail, the liquid crystal layer 32 is constituted of a polymer dispersed liquid crystal (PDLC) or a polymer network liquid crystal (PNLC). PDLC has a structure in which the liquid crystal 32B is dispersed in the polymer layer (polymer network) 32A, that is, a structure in which the liquid crystal 32B is phase-separated in the polymer layer 32A. Alternatively, the liquid crystal 32B in the polymer layer 32A may have a continuous phase.

As the polymer layer 32A, a photocurable resin can be used. For example, in PDLC, a solution obtained by mixing a liquid crystal with a photopolymerization type polymer precursor (monomer) is irradiated with ultraviolet light to polymerize a monomer to form a polymer, and the liquid crystal is dispersed in the network of the polymer. As the liquid crystal 32B, for example, a nematic liquid crystal having positive (positive type) dielectric anisotropy is used. That is, when no voltage is applied to the liquid crystal layer 32, it becomes a state in which the liquid crystal molecules 32C are randomly arranged in the polymer layer 32A, and when a voltage is applied to the liquid crystal layer 32, it becomes a state in which the liquid crystal molecules 32C are directed perpendicular to an electric field direction (a state in which a major axis of the liquid crystal molecule 32C is oriented toward the electric field direction).

Next, the operation of the liquid crystal display device 10 will be described. The display operation of the liquid crystal display device 10 is controlled by the control circuit 15. The control circuit 15 controls the scanning driver 12, the signal driver 13, and the common voltage supply circuit 14, and applies a voltage between the pixel electrode 39 and the common electrode 31.

When an electric field is not applied to the liquid crystal layer 32 (an OFF state), that is, when the pixel electrode 39 and the common electrode 31 are set to the same voltage (for example, 0 V), the liquid crystal molecules 32C are randomly arranged.

In this case, since the refractive index of the polymer layer 32A is different from the refractive index of the liquid crystal layer 32B, an incident light from the COM film substrate 30 side is scattered in the liquid crystal layer 32 (a scattering state). The incident light in the scattering state is reflected by the reflective film 35, and a scattered light is radiated from the COM film substrate 30. At this time, since the liquid crystal layer 32 is observed as an opaque white turbid state, the display which is visible on the observer's side is a white display. Actually, since the color filter CF is arranged on the TFT film substrate 33 side, a color display according to the color of the color filter CF is obtained.

On the other hand, when an electric field is applied to the liquid crystal layer 32 (an ON state), that is, when a voltage difference (for example, a positive voltage to the pixel electrode 39 and 0 V to the common electrode 31) is applied to the pixel electrode 39 and the common electrode 31, the major axis of the liquid crystal molecules 32 C is oriented in the electric field direction (i.e., the vertical direction).

In this case, since the refractive index of the polymer layer 32A is substantially the same as the refractive index of the liquid crystal layer 32B, an incident light from the COM film substrate 30 side passes through the liquid crystal layer 32. The incident light that has passed through the liquid crystal layer 32 is reflected by the reflective film 35, and a mirror surface light (a specular reflection light) is radiated from the COM film substrate 30. At this time, since a display light other than the specular reflection light is not radiated, the display which is visible on the observer's side is a black display (a dark display).

### [3] Effect of Embodiment (Liquid Crystal Display Device)

According to the present embodiment, since the COM substrate and the TFT substrate are constituted of a film, it is possible to provide a liquid crystal display device which is flexible and resistant to damage.

A display device using a polymer dispersed liquid crystal has a structure in which a TFT substrate on which a TFT is formed and a COM substrate on which a common electrode is formed sandwich the polymer dispersed liquid crystal, and a reflective film and a color filter are formed on the TFT substrate side. Since such a liquid crystal display device does not require a polarizing plate unlike a display using a normal liquid crystal, a bright reflective display is possible. Therefore, as a reflection type color liquid crystal display device, it can be used for portable electronic books, electronic dictionaries, or wearable devices which require high visibility outdoors.

However, in this liquid crystal display device, usually, the COM substrate and the TFT substrate are made from glass. Therefore, when used as, for example, an electronic book, an electronic dictionary, or a wearable device, there may be a problem that the COM glass substrate and the TFT glass substrate sandwiching the liquid crystal layer are broken.

Therefore, in the present embodiment, by using a film for the COM substrate and the TFT substrate, it is possible to realize a liquid crystal display device in which flexibility is given to the liquid crystal panel and the liquid crystal panel is resistant to damage.

On the other hand, if the COM film substrate and the TFT film substrate are constituted of a film, these film substrates have flexibility, which may make the manufacturing process difficult.

Hereinafter, a manufacturing method for solving the difficulty of such a manufacturing process will be described.

### [4] Manufacturing Method of Liquid Crystal Display Device

In the manufacture of the liquid crystal display device 10, first, processes for the TFT film substrate 33 and the COM film substrate 30 are respectively performed, and after that, a process of manufacturing the liquid crystal display device 10 by combining the TFT film substrate 33 and the COM film substrate 30 is performed.

FIG. 7 shows a cross section of the TFT film substrate 33, and FIG. 8 shows a cross section of the COM film substrate 30.

The TFT film substrate 33 is composed of a film containing PI. The thickness of the TFT film substrate 33 is, for example, 5 to 50 µm, and is 38 µm herein. On one main surface of the TFT film substrate 33, a silane coupling material 50 is adhered. The silane coupling material 50 is used for adhering the TFT film substrate 33 and a glass substrate for supporting this TFT film substrate 33. The thickness of the silane coupling material 50 is, for example, 100 nm or less, and is 10 nm herein.

The COM film substrate 30 is composed of a film containing PET. The thickness of the COM film substrate 30 is, for example, 10 to 200 µm. On one main surface of the COM film substrate 30, a silane coupling material 51 is adhered. The silane coupling material 51 is used for adhering the COM film substrate 30 and a glass substrate for supporting this COM film substrate 30. The thickness of the silane coupling material 51 is, for example, 100 nm or less, and is 10 nm herein.

### [4-1] Manufacturing Process of TFT Film Substrate

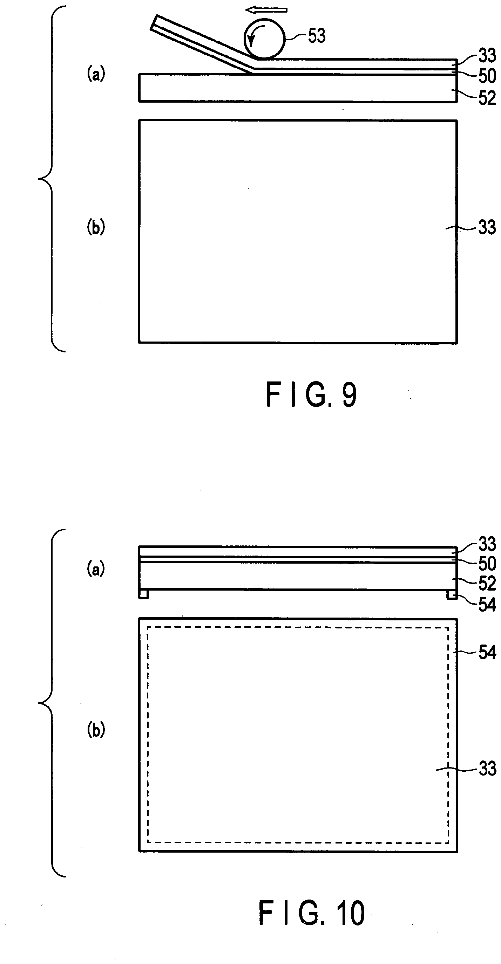

FIGS. 9 to 13 are diagrams showing manufacturing processes for the TFT film substrate 33. FIGS. 9 (a), 10 (a), 11, 12 (a), 13 (a), and 13 (b) are side views, and FIGS. 9 (b), 10 (b), 12 (b), and 13 (c) are plan views.

First, the TFT film substrate 33 shown in FIG. 7 is attached to a glass substrate 52. Specifically, as shown in FIG. 9 (a), the TFT film substrate 33 with the silane coupling material 50 is attached to the glass substrate 52 by a roller 53. The silane coupling material 50 adheres the TFT film substrate 33 and the glass substrate 52.

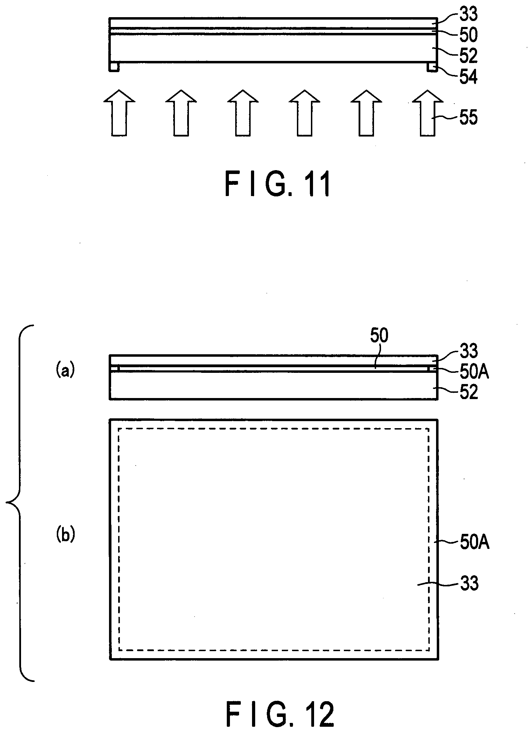

Next, as shown in FIGS. 10 (a) and 10 (b), a black tape 54 is attached to edge portions of the surface of the glass substrate 52 to which the TFT film substrate 33 is not adhered. Subsequently, as shown in FIG. 11, UV light (ultraviolet light) 55 is applied from the side of the surface of the glass substrate 52 to which the black tape 54 is attached. At this time, the black tape 54 blocks the UV light 55.

Thereafter, as shown in FIGS. 12 (a) and 12 (b), the black tape 54 is peeled off from the glass substrate 52. Thereby, a region (weak adhesive portion) to which the black tape 54 is not attached is irradiated with the UV light 55, and thus becomes more weakly adhesive than a region (strong adhesive portion) 50A to which the black tape 54 is attached. The weak adhesive portion is, for example, 0.5 N/cm or less (preferably, 0.1 N/cm or less), and the strong adhesive portion 50A is 0.5 to 1 N/cm. The adhesive strength of the weak adhesive portion and the strong adhesive portion has a negative correlation with intensity and irradiation time of the UV light 55.

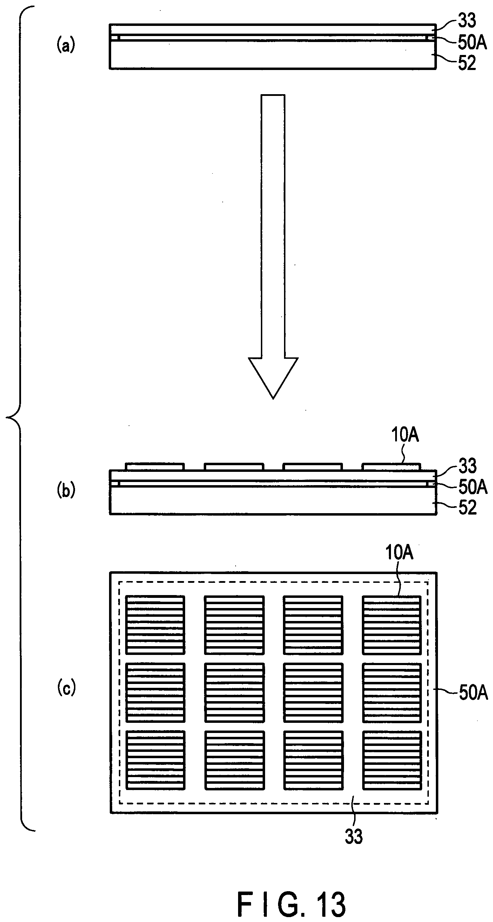

Thereafter, as shown in FIGS. 13 (a), 13 (b), and 13 (c), the manufacturing process of the insulating film 41 and the subsequent processes shown in FIG. 4 are performed on the TFT film substrate 33 to form the pixel electrode 39. By the above, a plurality of cells 10A are formed on the TFT film substrate 33. The cell 10A is a member of a middle process before the liquid crystal display device 10 is completed.

### [4-2] Manufacturing Process of COM Film Substrate

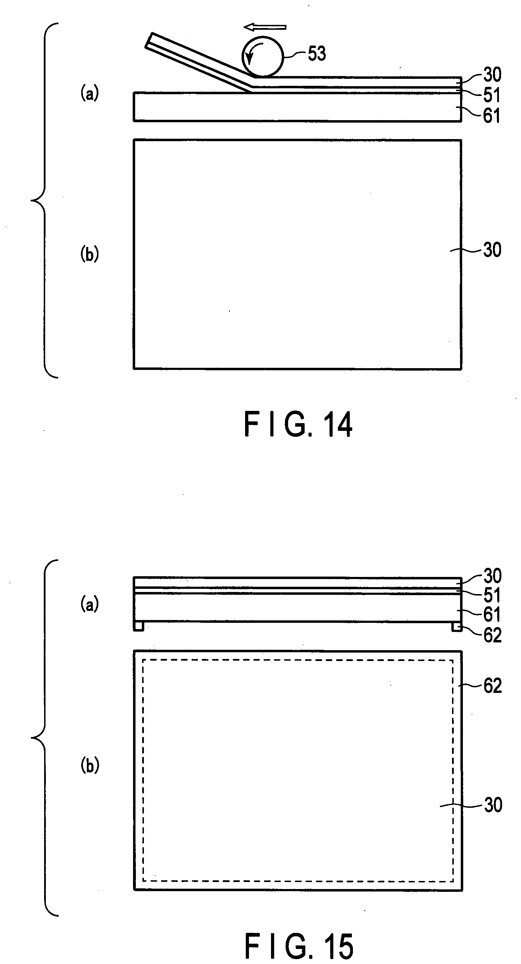

FIGS. 14 to 18 are diagrams showing manufacturing processes for the COM film substrate 30. FIGS. 14 (a), 15 (a), 16, 17 (a), 18 (a), and 18 (b) are side views, and FIGS. 14 (b), 15 (b), 17 (b), and 18 (c) are plan views.

First, the COM film substrate 30 shown in FIG. 8 is attached to the glass substrate 61. Specifically, as shown in FIG. 14 (a), the COM film substrate 30 with the silane coupling material 51 is attached to the glass substrate 61 by the roller 53. The silane coupling material 51 adheres the COM film substrate 30 and the glass substrate 61.

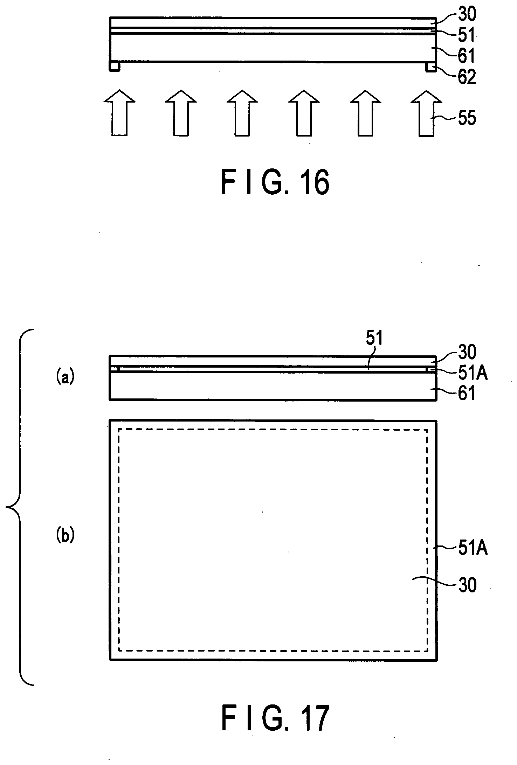

Next, as shown in FIGS. 15 (a) and 15 (b), the black tape 62 is attached to edge portions of the surface of the glass substrate 61 to which the COM film substrate 30 is not adhered. Subsequently, as shown in FIG. 16, the UV light 55 is applied from the side of the surface of the glass substrate 61 to which the black tape 62 is attached. At this time, the black tape 62 blocks the UV light 55.

Thereafter, as shown in FIGS. 17 (a) and 17 (b), the black tape 62 is peeled off from the glass substrate 61. Thereby, a region (weak adhesive portion) to which the black tape 62 is not attached is irradiated with the UV light 55, and thus becomes more weakly adhesive than a region (strong adhesive portion) to which the black tape 62 is attached. Similarly to the above-described case, the weak adhesive portion is, for example, 0.5 N/cm or less (preferably, 0.1 N/cm or less), and the strong adhesive portion is 0.5 to 1 N/cm. The adhesive strength of the weak adhesive portion and the strong adhesive portion has a negative correlation with intensity and irradiation time of the UV light 55.

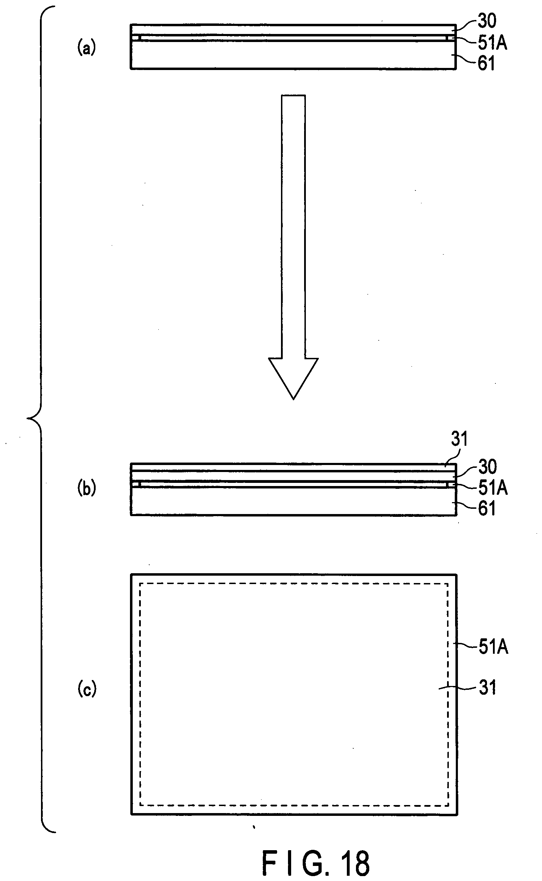

Thereafter, as shown in FIGS. 18 (a), 18 (b), and 18 (c), the manufacturing process of the common electrode 31 and the subsequent processes shown in FIG. 4 are performed on the COM film substrate 30. By the above, the manufacturing process for the COM film substrate 30 is completed.

### [4-3] Manufacturing Process of Liquid Crystal Display Device

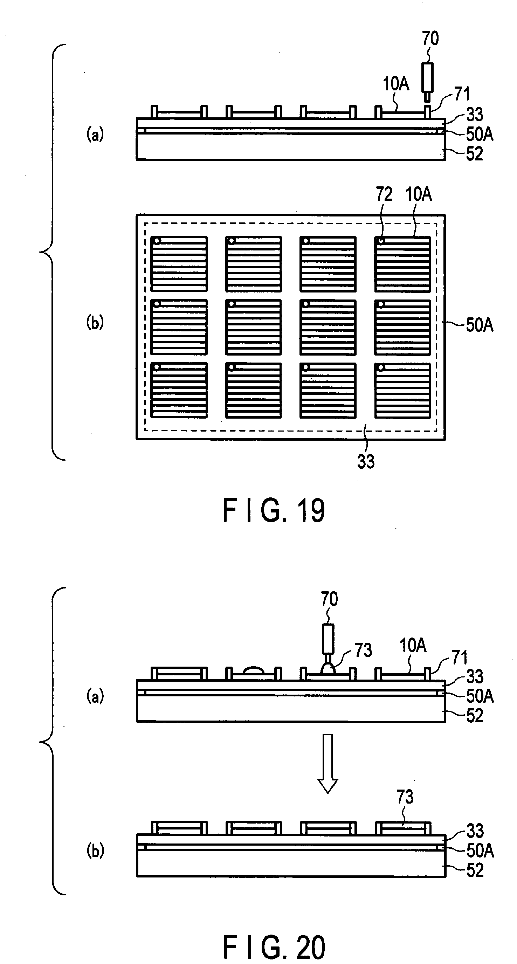

FIGS. 19 to 23 are diagrams showing a process of manufacturing the liquid crystal display device 10 by combining the TFT film substrate 33 and the COM film substrate 30. FIGS. 19 (a), 20 (a), 20 (b), 21 (a), 21 (b), 22, 23 (a), 23 (b), and 23 (c) are side views, and FIG. 19 (b) is a plan view. On the TFT film substrate 33, a plurality of cells 10A are arranged.

First, for each cell 10A on the TFT film substrate 33 shown in FIG. 13 (b), a seal member 71 and a cross member 72 are formed. Specifically, as shown in FIGS. 19 (a) and 19 (b), the seal member 71 is discharged by a dispenser 70 for each cell 10A on the TFT film substrate 33. Subsequently, the cross member 72 is discharged for each cell 10A by the dispenser 70. The seal member 71 surrounds the cell 10A, and encloses the liquid crystal. The cross member 72 makes the common electrode 31 on the COM film substrate 30 conductive with the wiring on the TFT film substrate 33.

Next, a liquid crystal 73 is supplied for each cell 10A on the TFT film substrate 33. Specifically, as shown in FIG. 20 (a), for each cell 10A, the liquid crystal 73 is dropped into its seal member 71 by the dispenser 70. Thereafter, as shown in FIG. 20 (b), the liquid crystal 73 spreads in the seal member 71.

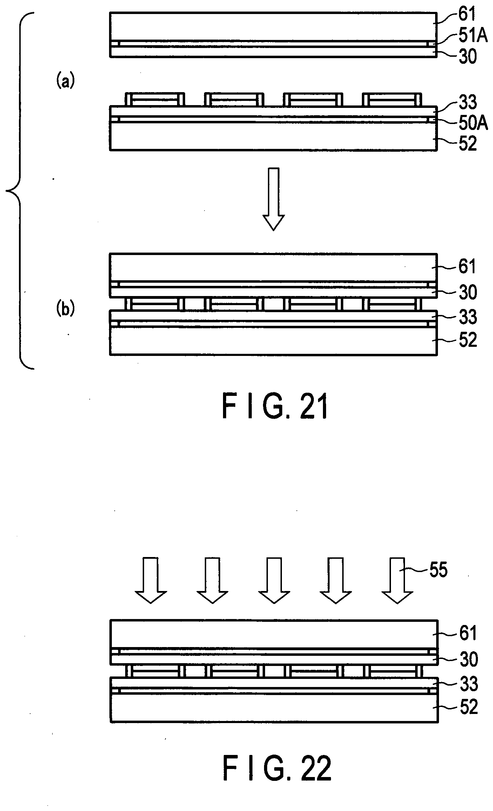

Next, as shown in FIGS. 21 (a) and 21 (b), the TFT film substrate 33 shown in FIG. 20 (b) and the COM film substrate 30 shown in FIG. 18 (b) are put together. Subsequently, as shown in FIG. 22, the UV light 55 is applied from the COM film substrate 30 side. Thereby, the monomer in the liquid crystal 73 is polymerized to constitute the polymer dispersed liquid crystal, and the seal member 71 is provisionally cured.

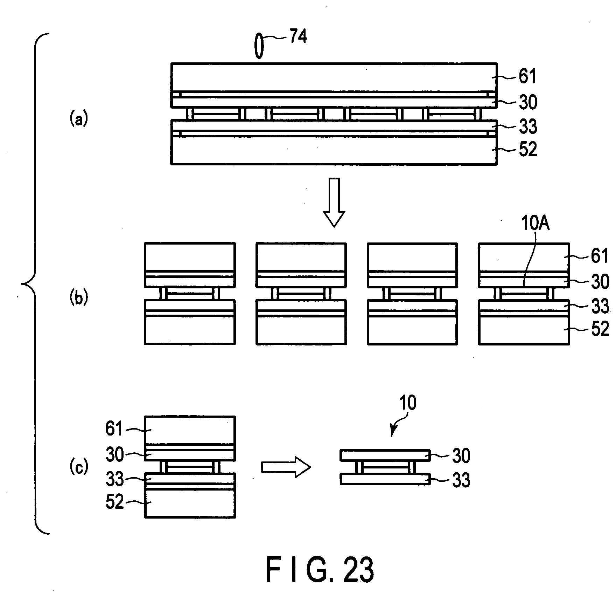

Next, as shown in FIG. 23 (a), a scribe line is drawn on the COM film substrate 30 and the TFT film substrate 33 shown in FIG. 22 by a wheel 74 for scribing. Subsequently, as shown in FIG. 23 (b), the substrates are separated for each cell 10A. Furthermore, as shown in FIG. 23 (c), the glass substrates 61 and 52 are peeled off from the COM film substrate 30 and the TFT film substrate 33, respectively. Through the above processes, the liquid crystal display device 10 is manufactured.

In the processes shown in FIGS. 23 (a), 23 (b), and 23 (c), the COM film substrate 30 and the TFT film substrate 33 with the glass substrates adhered thereto are separated for each cell 10A, and then the glass substrates are peeled off, but the glass substrates 61 and 52 may be peeled off from the COM film substrate 30 and the TFT film substrate 33 first, and then be separated for each cell 10A.

### [5] Effect of Embodiment (Manufacturing Method of Liquid Crystal Display Device)

According to the above-described manufacturing method of the liquid crystal display device, the COM film substrate 30, and the TFT film substrate 33 having flexibility are supported by the glass substrates so that manufacturing processes using a normal glass substrate can be used as they are. This makes it possible to eliminate difficulties in the manufacturing processes.

The present invention is not limited to the above-described embodiment, but can be embodied by modifying structural elements without departing from the gist thereof. Furthermore, the above-described embodiment includes inventions in various stages, and various inventions can be constituted by appropriately combining a plurality of structural elements disclosed in one embodiment or appropriately combining structural elements disclosed in different embodiments. For example, even if some structural elements are deleted from all the structural elements disclosed in the embodiments, the problem to be solved by the invention can be solved, and in the case where the effect of the invention can be obtained, an embodiment from which these structural elements are deleted can be extracted as an invention.

## Claims

1. A liquid crystal display device comprising:
a first film substrate having flexibility;
a second film substrate having flexibility and arranged so as to be opposed to the first film substrate;
a liquid crystal layer including a polymer dispersed liquid crystal (PDLC) or a polymer network type liquid crystal (PNLC) and sandwiched between the first film substrate and the second film substrate;
a switching element provided on the first film substrate;
a reflective film provided on the switching element;
a pixel electrode provided on the reflective film and electrically connected to a drain electrode of the switching element; and
a common electrode provided on the second film substrate.

2. The liquid crystal display device according to claim 1, further comprising a color filter arranged on the switching element on the first film substrate.

3. The liquid crystal display device according to claim 1, wherein the first film substrate has a heat resistance of 300°C or higher and a coefficient of thermal expansion of 5 × 10⁻⁶/°C or less.

4. The liquid crystal display device according to claim 1, wherein the second film substrate has a heat resistance of 100 °C or higher and a transmittance of a visible light of 80% or more.

5. The liquid crystal display device according to claim 1, wherein the second film substrate transmits light of a 300 to 400 nm waveband on a shortwave side which is outside a visible light, and has a transmittance of 20% or more in a 365 nm wavelength.

6. The liquid crystal display device according to claim 1, further comprising a transparent conductive film provided on the second film substrate, the transparent conductive film having a thickness of 10 to 200 nm.

7. The liquid crystal display device according to claim 1, wherein the first film substrate is made of polyimide, and the second film substrate is made of polyethylene terephthalate.

8. The liquid crystal display device according to claim 1, wherein the switching element is a thin film transistor, and the thin film transistor is configured to drive the pixel electrode.

9. The liquid crystal display device according to claim 1, further comprising:
a wiring layer provided between the first film substrate and the switching element and electrically connected to a source electrode of the switching element; and
an insulating film provided between the first film substrate and the wiring layer.

10. A manufacturing method of a liquid crystal display device comprising:
attaching a first film substrate to a first glass substrate;
forming a switching element, a reflective film, and a color filter on the first film substrate adhered to the first glass substrate;
attaching a second film substrate to a second glass substrate; and
combining the first glass substrate with the first film substrate and the second glass substrate with the second film substrate and filling a polymer dispersed liquid crystal or a polymer network liquid crystal in between the first film substrate and the second film substrate.

11. The manufacturing method of a liquid crystal display device according to claim 10, wherein the first film substrate and the first glass substrate are adhered by a first adhesive material, the second film substrate and a second glass substrate are adhered by a second adhesive material, at least one of the first and second adhesive materials is a silane coupling material, and an adhesive strength of the silane coupling material is 0.01 to 1 N/cm.

12. The manufacturing method of a liquid crystal display device according to claim 10, wherein the polymer dispersed liquid crystal or the polymer network liquid crystal in between the first film substrate and the second film substrate is filled in by one drop filling (ODF).

13. The manufacturing method of a liquid crystal display device according to claim 10, further comprising:
after filling the polymer dispersed liquid crystal or the polymer network liquid crystal, peeling off the first and second glass substrates from the first and second film substrates, respectively; and
separating the first and second film substrates from which the first and second glass substrates are peeled off into a plurality of liquid crystal display devices.

14. The manufacturing method of a liquid crystal display device according to claim 10, further comprising:
after filling the polymer dispersed liquid crystal or the polymer network liquid crystal, separating the first and second glass substrates and the first and second film substrates into a plurality of liquid crystal display substrates; and
peeling off the first and second glass substrates from the first and second film substrates of the liquid crystal display substrates, respectively, to form a plurality of liquid crystal display devices.

15. The manufacturing method of a liquid crystal display device according to claim 10, further comprising after forming the color filter, forming a seal member on the first film substrate,
wherein the seal member seals in a periphery of the polymer dispersed liquid crystal or the polymer network liquid crystal and is an ultraviolet curing type or a UV/heat combination curing type.
